# EUROPÄISCHE PATENTSCHRIFT

(11) **EP 1 338 358 B1**
(45) Veröffentlichungstag und Bekanntmachung des Hinweises auf die Patenterteilung: **17.10.2007**
(21) Anmeldenummer: 03003863.2
(22) Anmeldetag: 20.02.2003
(51) Int. Cl.: B21J 15/04, B21J 15/02, B65H 75/14, B65H 75/50, F16B 5/04

(54) **Vorrichtung und Verfahren zum Verbinden flächiger Teile**
Apparatus and method for connecting planar elements
Dispositif et procédé pour l'assemblage de pièces plates

(30) Priorität: 22.02.2002 DE 10207587
(43) Veröffentlichungstag der Anmeldung: 27.08.2003
(73) Patentinhaber: Gmelin, Dieter, 74918 Angelbachtal (DE)
(72) Erfinder: Gmelin, Dieter, 74918 Angelbachtal (DE)
(74) Vertreter: Naumann, Ulrich

(56) Entgegenhaltungen:
- EP-A- 0 903 507
- DE-A- 19 822 226
- US-A- 4 447 944
- US-A- 4 765 177

## Beschreibung

Die vorliegende Erfindung betrifft eine Vorrichtung gemäß Oberbegriff des Anspruchs 1 und ein Verfahren gemäß Oberbegriff des Anspruchs 14 zum Verbinden flächiger Teile, insbesondere zur Herstellung einer Kabeltrommel, wobei die Teile vorzugsweise parallel zueinander durch ein Distanzteil beabstandet und über ein sich durch das Distanzteil und die beiden Teile hindurch erstreckendes Rohr zusammengehalten sind und wobei eine ein Mundstück aufweisende Verformungseinheit zum Verformen - vorzugsweise zum Bördeln - des Rohrendes vorgesehen ist.

Grundsätzlich dient die hier beanspruchte Vorrichtung ganz allgemein zum Verbinden flächiger Teile, wobei dabei wesentlich ist, dass diese Teile im wesentlichen parallel zueinander beabstandet sind. Dazu ist zwischen diesen Teilen ein Distanzteil oder dergleichen angeordnet. Dabei kann es sich beispielsweise um die Seitenteile bzw. Flanschteile einer aus Holz, Kunststoff oder Metall gefertigten Kabeltrommel oder Spule handeln, die den Abnehmern, so beispielsweise den Kabelproduzenten, zur Selbstmontage in Einzelteilen geliefert wird. Folglich ist es auf Seiten der Kabelhersteller erforderlich, die in Einzelteilen gelieferten Kabeltrommeln bzw. Spulen mit einer geeigneten Vorrichtung, nämlich mit einer Vorrichtung der hier in Rede stehenden Art, zusammenzubauen bzw. zu montieren.

Eine solche Kabeltrommel bzw. Spule besteht aus zwei meist kreisscheibenförmigen Flanschteilen bzw. Scheiben, die unter Einbeziehung eines dazwischen angeordneten Kerns mittels mehrerer Rohre zusammengehalten werden. Diese Rohre erstrecken sich von den Flanschteilen durch den als Distanzteil dienenden Kern hindurch bis hin zum gegenüberliegenden Flanschteil bzw. durch dieses hindurch. Die Rohre dienen demnach zum Zusammenhalten der Einzelteile der Kabeltrommel.

Eine Vorrichtung der gattungsbildenden Art ist beispielsweise aus US-A-4 447 944 bekannt. Die zweiteilige Form des Anspruchs 1 basiert auf diesem Dokument.

Ein Verfahren und eine alternative Vorrichtung der gattungsbildenden Art sind beispielsweise aus DE 198 22 226 A1 bekannt. Die zweiteilige Form des Anspruchs 14 basiert auf diesem Dokument. Hierbei weisen die Rohre vor der Montage an einem freien Ende einen Anschlag auf, der in Form einer Bördelung ausgebildet sein kann. Mit dem gegenüberliegenden Ende werden die Rohre durch das Flanschteil, den Kern und das gegenüberliegende Flanschteil hindurchgesteckt, so dass die Bördelung an einem der Flanschteile zur Anlage kommt. Auf der gegenüberliegenden Seite ragt das Rohr mit dem freien Ende aus dem gegenüberliegenden Flanschteil nach außen heraus.

Die aus DE 198 22 226 A1 bekannte Verformungseinheit umfasst eine in das freie Ende des Rohrs einsteckbare Klemmeinrichtung zum innenseitigen Spannen des Rohrs und eine Zugeinrichtung zum Ziehen des gespannten Rohrs gegen ein das freie Ende des Rohrs bördelndes Mundstück. Mit dieser Verformungseinheit wird das andere Ende des Rohrs gebördelt, wodurch die Kabeltrommel letztendlich zusammengebaut ist.

Die für die aus DE 198 22 226 A1 bekannte Vorrichtung zum Verbinden von Teilen verwendeten Rohre müssen einen Anschlag oder eine Bördelung aufweisen, um in der oben beschriebenen Weise zum Zusammenbau verwendet werden zu können. So ist vor der Montage der Einzelteile ein Ende des Rohrs zunächst zu bördeln bzw. mit einem geeigneten Anschlag zu versehen, was mit einem zusätzlichen Arbeitsschritt verbunden ist. Hierzu könnte die aus DE 198 22 226 A1 bekannte Vorrichtung zum Bördeln verwendet werden, jedoch kann durch die dort vorgesehene, in das Rohr einzusteckende Klemmeinrichtung bei dem Spann- und Zugvorgang das Rohr von innen heraus aufgeweitet werden. Hierdurch kann in nachteiliger Weise die Montage der Teile erschwert oder verzögert werden, wenn nämlich das aufgeweitete Rohr nicht mehr durch die in den Teilen vorgesehenen Bohrungen mehr passt.

Der vorliegenden Erfindung liegt daher die Aufgabe zugrunde, eine Vorrichtung der gattungsbildenden Art anzugeben und weiterzubilden, bei der eine gesonderte Vorbereitung der Rohre nicht erforderlich ist, so dass die Montage vereinfacht und die Montagedauer verkürzt werden kann.

Es ist auch eine Aufgabe der Erfindung sicherzustellen, dass Verformung nur an den Rohrenden erfolgt und beispielsweise sich nicht im mittleren Bereich des Rohrs verbiegt.

Die erfindungsgemäße Vorrichtung der gattungsbildenden Art löst die voranstehende Aufgabe durch die Merkmale des Patentanspruchs 1.

Erfindungsgemäß ist zunächst erkannt worden, dass standardmäßige Rohre ohne Anschlag oder ohne vorherige Bördelung direkt zur Montage verwendet werden können, wenn ein Führungsmittel vorgesehen ist, das mit der Verformungseinheit zusammenwirkt. Dieses Führungsmittel ist entweder in das Rohr einbringbar oder das Rohr wird auf das Führungsmittel aufgebracht, je nachdem, welche Montageart angewandt wird. Jedenfalls erstreckt sich das Führungsmittel durch das Rohr hindurch und umfasst an seinem einen Ende ein Mundstück. Dieses Mundstück dient - wie auch das der Verformungseinheit zugeordnete Mundstück - ebenfalls zur Verformung des ihm zugewandten Rohrendes. Somit können beide Rohrenden durch beide Mundstücke von beiden Enden des Rohrs her verformt werden, obwohl die Verformungseinheit lediglich von einem Rohrende her unmittelbar angreift. Die Verformung der beiden Rohrenden wird dadurch bewirkt, dass die beiden Mundstücke aufeinander zu bewegt werden.

Erfindungsgemäß ist der Außendurchmesser des Führungsmittels nur geringfügig kleiner als der Innendurchmesser des Rohrs ; das Rohr ist während der durch die Bewegung der beiden Mundstücke induzierten Verformung vom Führungsmittel geführt, und es können aufgrund dieser Führung keine wesentlichen Verformungen des Rohrs in dem Bereich zwischen den Rohrenden auftreten. Demgemäss ist es von Vorteil, wenn das der Verformungseinheit zugewandte Ende des Führungsmittels etwas über das Rohr übersteht, also insgesamt länger als das Rohr ausgebildet ist. Durch die erfindungsgemäße Vorrichtung können beide Rohrenden gleichzeitig verformt bzw. gebördelt werden, was die Montagedauer in besonders vorteilhafter Weise ganz erheblich verkürzt. Somit entfällt auch der das Rohr vorbereitende Arbeitsgang und die damit verbundene Problematik, so dass in weiter vorteilhafter Weise der Montagevorgang vereinfacht wird.

Nun kann ganz allgemein die Verformungseinheit das Führungsmittel samt Rohr gegen das ihr zugeordnete Mundstück ziehen, wodurch die beiden Mundstücke aufeinander zu bewegbar sind. Die Verformungseinheit könnte allerdings auch das Führungsmittel festhalten oder darin einklinken und das ihr zugeordnete Mundstück in Richtung des anderen Mundstücks drücken. Auch hierdurch sind die Mundstücke aufeinander zu bewegbar. Schließlich könnte eine Kombination dieser beiden Alternativen vorgesehen sein, wonach nämlich die Verformungseinheit das Führungsmittel samt Rohr gegen das ihr zugeordnete Mundstück zieht und gleichzeitig das ihr zugeordnete Mundstück in Richtung des anderen Mundstücks drückt.

In einer konkreten Ausführungsform erstreckt sich das der Verformungseinheit zugewandte Ende des Führungsmittels durch das der Verformungseinheit zugeordnete Mundstück und in die Verformungseinheit hinein. So kann durch eine einfache konstruktive Ausgestaltung das Angreifen der Verformungseinheit am Führungsmittel realisiert werden. Der Durchmesser des Durchgangs des Mundstücks entspricht hierbei im wesentlichen dem des Führungsmittels in diesem Bereich.

Vorzugsweise soll die erfindungsgemäße Vorrichtung zum bördeln der Rohrenden eingesetzt werden. Hierzu weisen die Mundstücke eine zum Bördeln geeignete Form auf, die die Rohrenden nach außen zu stülpen vermag. Die Mundstücke sind vorzugsweise größtenteils massiv ausgebildet, da bei der Verformung hohe Kräfte auf das Rohr auszuüben sind. Zur gleichförmigen Verformung der beiden Rohrenden weisen die zur Verformung des Rohrs dienenden Bereiche der beiden Mundstücke zumindest nahezu die gleiche Form auf, so dass hierdurch ein symmetrische Aufbau gegeben ist, der eine stabile Verbindung der Teile sicherstellt.

Vorzugsweise ist der vom Rohr umgebende Bereich des Führungsmittels zylinderförmig ausgebildet, z.B. in Form einer massiv ausgebildeten Stange.

Das Führungsmittel weist in dem der Verformungseinheit zugewandten Bereich einen geringeren Außendurchmesser auf, der sich teilweise in den vom Rohr umgebenden Bereich erstreckt. Somit kann insbesondere bei einer Bördelung der Rohrenden das Mundstück der Verformungseinheit beim Bördelungsvorgang mit seinem achsnahen Bereich, der gegebenenfalls einen Fortsatz aufweisen kann, in das Rohr eindringen und hierdurch die Bördelung des Rohrendes von innen nach außen unterstützen. Durch einen Fortsatz des Mundstücks wird das Rohr auch im Bereich des Rohrendes von innen her geführt. Vorzugsweise beträgt der geringere Außendurchmesser des Führungsmittels etwa die Hälfte oder zwei Drittel des Innendurchmessers des Rohrs, wobei bei der Außendurchmesser des Führungsmittels derart zu wählen ist, dass das Führungsmittel beim Bördelvorgang nicht abreist.

Hinsichtlich einer konkreten konstruktiven Ausgestaltung könnte das Führungsmittel samt dem ihm zugeordneten Mundstück einteilig ausgebildet sein, es könnte beispielsweise aus dem Vollen gefräst sein. Alternativ könnte es modular zusammenbaubar ausgebildet sein, was hier bevorzugt wird. Das modulare Führungsmittel weist ein Mundstück auf, das an einem zylinderförmig ausgebildeten Mittelteil befestigbar ist. In das andere Ende des zylinderförmigen Mittelteils ist eine Gewindestange einschraubbar, die das der Verformungseinheit zugewandte Ende des Führungsmittels bildet. Der Vorteil eines modular zusammenbaubaren Führungsmittels ist eine konfektionierbare Ausgestaltung des Führungsmittels auf die jeweils zu fertigende Kabeltrommel.

Ganz allgemein ist die Verbindung bzw. die Kraftübertragung zwischen Führungsmittel und Verformungseinheit mittels Kraftschluss, Reibschluss und/oder Formschluss herstellbar. Insbesondere aufgrund der für die Verformung der Rohrenden aufzuwendenden hohen Kräfte ist sowohl eine Kraftschluss- als auch eine Reibschlussverbindung vorgesehen. Hierzu könnte das der Verformungseinheit zugewandte Ende des Führungsmittels eine raue Oberfläche, ein Gewinde oder eine in Zugrichtung gerichtete Struktur, vorzugsweise in Form einer Zahnung, Schuppung oder dergleichen, aufweisen. Diese Ausgestaltung begünstigt den Reibschluss einer in Rede stehenden Verbindung. Zusätzlich oder alternativ könnte das der Verformungseinheit zugewandte Ende des Führungsmittels mindestens eine Hinterschneidung aufweisen, in die ein der Verformungseinheit zugeordnetes, komplementär ausgebildetes Element eingreift. Somit wäre auch eine Formschluss-Verbindung realisierbar.

Im Rahmen einer einfachen konstruktiven Ausgestaltung der Verformungseinheit weist diese ein Gehäuse auf, an dem das ihr zugeordnete Mundstück befestigt ist. In diesem Fall zieht die Verformungseinheit das Führungsmittel samt Rohr gegen das am Gehäuse befestigte Mundstück, wodurch die beiden Mundstücke aufeinander zu bewegbar sind. Somit bildet das am Gehäuse der Verformungseinheit befestigte Mundstück die Bezugsebene, gegen die die Verformung letztendlich durchgeführt wird.

In einer bevorzugten Ausgestaltung der Verformungseinheit sind in deren Gehäuse Klauen vorgesehen, die das der Verformungseinheit zugewandte Ende des Führungsmittels greifen. Bei den Klauen könnte es sich um einzelne Segmente handeln, die vergleichbar zu einem Bohrfutter einer Bohrmaschine angeordnet sind. Hierbei könnten die Klauen in einem Innenkörper bewegbar angeordnet sein, wobei die Bewegungsrichtung der Klauen axial, d.h. in bzw. entgegen der Zugrichtung des Führungsmittels ausgerichtet ist. Vorzugsweise sind die Klauen durch eine Feder gespannt, wobei die Feder die Klauen in Richtung des Führungsmittels und gegebenenfalls zusammen - in radialer Richtung - drückt. Zum Greifen des Führungsmittels könnten die Klauen gegen die Federkraft der Feder in die Verformungseinheit weiter hinein bewegt werden, so dass das Ende des Führungsmittels sich dann zwischen den Klauen befindet und durch die Federkraft - zunächst hauptsächlich mittels Reibschluss - von den Klauen gehalten wird. Der in dem Gehäuse angeordnete, die Klauen aufnehmende Innenkörper ist in Zugrichtung verschiebbar angeordnet. Wenn nun der Verformungsvorgang ausgeführt wird, wird der Innenkörper samt Klauen in Zugrichtung bewegt, wobei diese Bewegung relativ zu dem am Gehäuse befestigten Mundstück erfolgt. Vorzugsweise weist der Innenkörper auf seiner den Klauen zugewandten Seite eine zum Führungsmittel hin konisch verlaufende Form bzw. Fläche auf. Hierdurch werden - eine komplementär ausgebildete Form der Klauen vorausgesetzt - die Klauen bei der Zugbewegung des Innenkörpers in radialer Richtung weiter zusammen gedrückt, so dass hierdurch zusätzlich zu der bereits erwähnten Reibschlussverbindung eine Kraftschlussverbindung gebildet ist.

In ganz besonders vorteilhafter Weise ist das Gehäuse der Verformungseinheit modular ausgebildet und an eine pneumatische oder hydraulische Versorgungseinrichtung anschließbar. Hierdurch kann ebenfalls auf bereits am Markt befindliche Standard-Komponenten zurückgegriffen werden, wodurch die Herstellungskosten einer erfindungsgemäßen Vorrichtung gering gehalten werden können. Das Gehäuse der Verformungseinheit könnte beispielsweise über ein Adapterstück an die pneumatische oder hydraulische Versorgungseinrichtung anschließbar sein. Im Konkreten umfasst die Verformungseinheit ein Hydraulik-/Pneumatikgehäuse mit einem Hydraulik-/Pneumatikkolben, der beispielsweise über das Adapterstück den Innenkörper samt Klauen betätigt bzw. bewegt. Insbesondere könnte es sich bei der Verformungseinheit um ein pneumatisch betriebenes, gegebenenfalls modifiziertes Handnietgerät oder Standnietgerät handeln.

In verfahrensmäßiger Hinsicht wird die eingangs genannte Aufgabe durch die Merkmale des Patentanspruchs 14 gelöst.

Durch das erfindungsgemäße Verfahren werden beide Rohrenden gleichzeitig verformt, wobei die Verformungseinheit jedoch nur von einer Seite her angreift. Somit ist im Fall der Montage einer Kabeltrommel eine Bearbeitung beider Seiten der Kabeltrommel nicht erforderlich, wodurch in besonders vorteilhafter Weise die Montagedauer verkürzt und der Montagevorgang als solches erheblich vereinfacht wird. Auf eine Vorbereitung der verwendeten Rohre im Rahmen eines zusätzlichen Arbeitsschritts kann in vorteilhafter Weise verzichtet werden.

Erfindungsgemäß ist der Außendurchmesser des Führungsmittels nur geringfügig kleiner als der Innendurchmesser des Rohrs ; das Rohr ist während der durch die Bewegung der beiden Mundstücke induzierten Verformung vom Führungsmittel geführt, und es können aufgrund dieser Führung keine wesentlichen Verformungen des Rohrs in dem Bereich zwischen den Rohrenden auftreten.

Zur Montage mehrerer baugleicher Kabeltrommeln könnte eine Basisplatte mehrere Führungsmittel umfassen, die fest mit der Basisplatte verbunden, parallel zueinander und senkrecht zur Basisplatte angeordnet sind. Eine Kabeltrommel könnte nun dadurch zusammengebaut werden, dass zunächst jeweils ein Rohr auf ein Führungsmittel aufgebracht wird. Weiterhin wird das erste Teil - der Seitenflansch der Kabeltrommel - auf die Führungsmittel mit den Rohren aufgebracht. Voraussetzung hierfür ist, dass das erste Teil entsprechende Bohrungen aufweist. Sodann wird das Distanzteil der Kabeltrommel und schließlich das zweite Teil - der andere Seitenflansch der Kabeltrommel - aufgebracht. Die Verformung der Rohrenden mit der Verformungseinheit schließen den Montagevorgang der Kabeltrommel ab, wobei hierbei mit der Verformungseinheit lediglich die der Basisplatte abgewandten Enden der einzelnen Führungsmittel zu greifen und durch entsprechende Aktivierung der Verformungseinheit zu verformen sind. Insoweit ist dieser Vorgang mit der Montage eines Autorads vergleichbar. Durch die fest mit der Basisplatte verbundenen Führungsmittel ist eine stabile Grundkonstruktion zur Montage gegeben, so dass ein umständliches Hantieren mit den Einzelteilen der Kabeltrommel in vorteilhafter Weise vermieden wird. Nach erfolgter Verformung der Rohrenden wird die fertig montierte Kabeltrommel von der Basisplatte bzw. den Führungsmitteln entfernt und die nächste Kabeltrommel kann montiert werden. Zur weiteren Verkürzung der Montagedauer könnten mehrere Verformungseinheiten vorgesehen sein, mit denen gleichzeitig mehrere Rohre verformt werden.

Es gibt nun verschiedene Möglichkeiten, die Lehre der vorliegenden Erfindung in vorteilhafter Weise auszugestalten und weiterzubilden. Dazu ist einerseits auf die den Patentansprüchen 1 und 14 nachgeordneten Patentansprüche und andererseits auf die nachfolgende Erläuterung der bevorzugten Ausführungsbeispiele der Erfindung anhand der Zeichnung zu verweisen. In Verbindung mit der Erläuterung der bevorzugten Ausführungsbeispiele der Erfindung anhand der Zeichnung werden auch im allgemeinen bevorzugte Ausgestaltungen und Weiterbildungen der Lehre erläutert. In der Zeichnung zeigen
- Fig. 1: in einer schematische Ansicht eine Kabeltrommel, mit zwei flächigen Flanschteilen und einem dazwischen angeordneten Distanzteil zum Aufrollen des Kabels,
- Fig.2: in einer schematischen Darstellung ein Ausführungsbeispiel einer erfindungsgemäßen Vorrichtung,
- Fig. 3: in einer schematischen Darstellung die Vorrichtung aus Fig. 2 in einem anderen Arbeitszustand,
- Fig. 4: in einer schematischen Darstellung die Vorrichtung aus den Fig. 2 und 3 mit einem Führungsmittel,
- Fig. 5: in einer schematischen Darstellung ein Ausführungsbeispiel eines Führungsmittels der erfindungsgemäßen Vorrichtung und
- Fig. 6: eine schematische Darstellung einer Montagestation für Kabeltrommeln. °

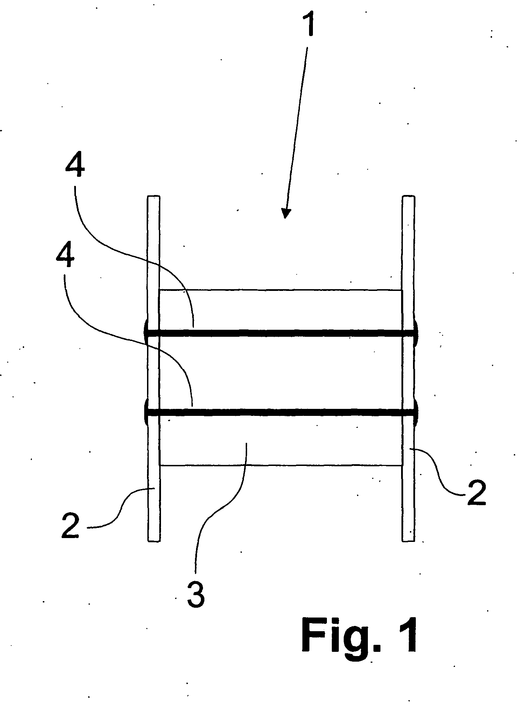

Fig. 1 zeigt lediglich beispielhaft eine Kabeltrommel 1 in schematischer Darstellung, wobei die beiden flächigen Flanschteile 2 parallel zueinander durch ein Distanzteil 3 beabstandet und über sich durch das Distanzteil 3 und die beiden flächigen Flanschteilen 2 hindurch erstreckende Rohre 4 zusammengehalten sind. Die Rohre 4 sind endseitig gebördelt.

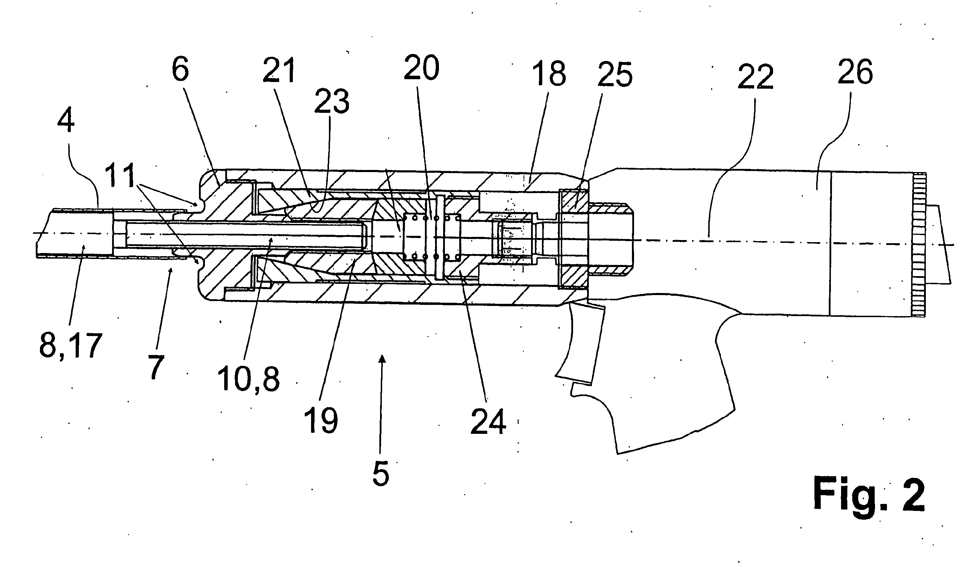

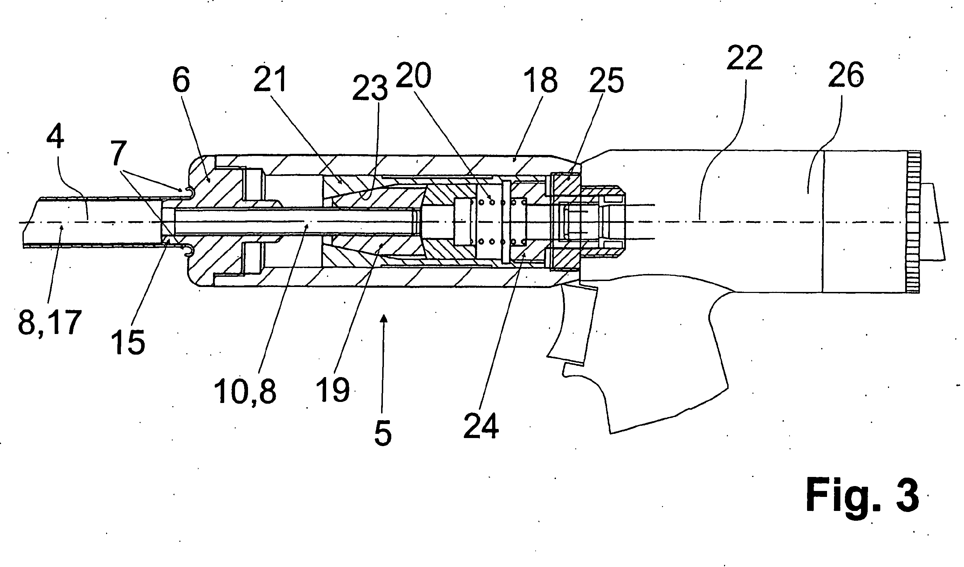

Die Fig. 2 und 3 zeigen ein Ausführungsbeispiel einer erfindungsgemäßen Vorrichtung zum Verbinden flächiger Teile, wobei es sich hierbei um die Flanschteile 2 einer Kabeltrommel 1 handeln kann, die unter Einbeziehung des Distanzteils 3 mittels Rohren 4 zusammengehalten werden. Folglich dient eine solche Vorrichtung vorzugsweise zur Herstellung einer Kabeltrommel 1. Die Vorrichtung umfasst eine Verformungseinheit 5, der ein Mundstück 6 zugeordnet ist. Die Verformungseinheit 5 dient zum Verformen des Rohrendes 7, wobei die Rohrenden 7 - wie in den Fig. 1 oder 3 gezeigt - gebördelt sind.

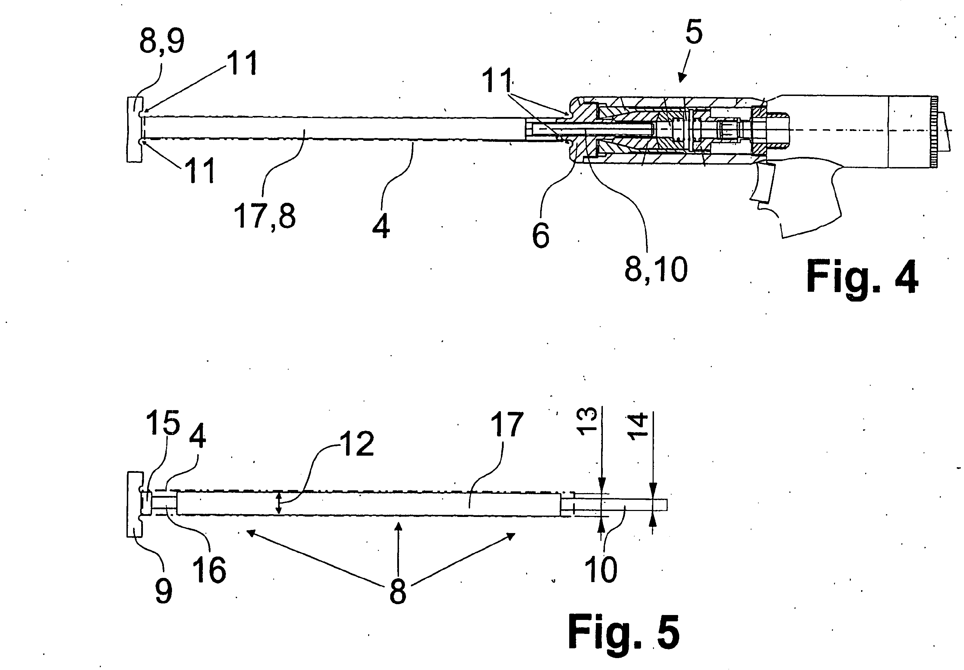

Erfindungsgemäß ist ein Führungsmittel 8 in das Rohr 4 einbringbar, wobei das Führungsmittel 8 sich durch das Rohr 4 hindurch erstreckt, was in den Fig. 4 und 5 gezeigt ist. Das Führungsmittel 8 umfasst an einem Ende ein Mundstück 9, wobei das Mundstück 9 ebenfalls zum Verformen des Rohrendes dient, und zwar des Rohrendes, das an dem Mundstück 9 zur Anlage kommt. Die Verformungseinheit 5 greift zum Einleiten des Verformungsvorgangs an dem Ende 10 des Führungsmittels 8 an - dieser Zustand ist in Fig. 2 gezeigt - und die beiden Mundstücke 6, 9 werden zum Verformen der Rohrenden aufeinander zu bewegt. Diese Bewegung wird dadurch eingeleitet, dass die Verformungseinheit 5 das Führungsmittel 8 samt Rohr 4 gegen das ihr zugeordnete Mundstück 6 zieht. Dieser Zustand ist in Fig. 3 gezeigt. Das Ende 10 des Führungsmittels 8 erstreckt sich durch das der Verformungseinheit 5 zugeordnete Mundstück 6 und in die Verformungseinheit 5 hinein.

Die Mundstücke 6, 9 weisen eine zum Bördeln geeignete ringförmige Form auf, die in den Fig. 2 bis 5 in einer Schnittansicht gezeigt sind. Die Mundstücke 6, 9 sind massiv ausgebildet. Der zur Verformung des Rohrs 4 dienende Bereich 11 der beiden Mundstücke 6, 9 weist die gleiche Form auf.

Der vom Rohr 4 - in den Fig. 4 und 5 gestrichelt gezeigt - umgebende Bereich des Führungsmittels 8 ist zylinderförmig ausgebildet. Hierbei ist der Außendurchmesser 12 des Führungsmittels 8 in diesem Bereich geringfügig kleiner als der Innendurchmesser 13 des Rohrs 4. Somit kann das Rohr 4 bei dem von den beiden Mundstücken 6, 9 ausgeführten Verformungsvorgang in diesem Bereich nicht verformt oder verbogen werden, ein "Ziehharmonika"-Effekt des Rohrs wird hierdurch wirksam verhindert.

Fig. 5 zeigt weiterhin, dass das Führungsmittel 8 in dem der Verformungseinheit 5 zugewandten Bereich 10 einen geringeren Außendurchmesser 14 aufweist, der etwa zwei Drittel des Innendurchmessers 13 des Rohrs 4 beträgt. Der Bereich mit geringerem Außendurchmesser 14 des Führungsmittels 8 erstreckt sich teilweise in den vom Rohr 4 umgebenden Bereich, so dass der Fortsatz 15 des Mundstücks 6 während des Verformungsvorgangs in das Rohr 4 eindringen kann.

Das in Fig. 5 gezeigte Führungsmittel 8 samt dem ihm zugeordneten Mundstück 9 ist modular zusammenbaubar ausgebildet. Das Mundstück 9 ist über eine Gewindestange 16 mit dem zylinderförmigen Mittelteil 17 verbunden, wobei die Gewindestange 16 sowohl in das Mundstück 9 als auch in das zylinderförmige Mittelteil 17 einschraubbar ist und jeweils mit einer Kontermutter - nicht eingezeichnet - gesichert ist. Das der Verformungseinheit 5 zugewandte Ende 10 des Führungsmittels 8 ist ebenfalls durch eine Gewindestange gebildet, die ebenfalls in das zylinderförmige Mittelteil 17 eingeschraubt und mit einer nicht eingezeichneten Kontermutter gesichert ist.

Die Verformungseinheit 5 umfasst ein im wesentlichen zylinderförmig ausgebildetes Gehäuse 18, an dem das ihr zugeordnete Mundstück 6 befestigt ist, was insbesondere den Fig. 2 und 3 entnommen werden kann. In dem Gehäuse 18 sind Klauen 19 vorgesehen, die das der Verformungseinheit 5 zugewandte Ende 10 des Führungsmittels 8 greifen. Bei den Klauen 19 handelt es sich um drei einzelne Segmente, die um das Ende 10 des Führungsmittels 8 herum angeordnet sind. Die Klauen 19 sind durch eine Feder 20 gespannt, die die Klauen nach vorne drückt, also in Richtung des Führungsmittels 8. Die Klauen 19 sind in einem im wesentlichen zylinderförmig ausgebildeten Innenkörper 21 angeordnet, der seinerseits im Gehäuse 18 entlang der Achse 22, d.h. entlang der Zugrichtung, bewegbar angeordnet ist.

Fig. 2 zeigt den Zustand, nachdem mit der Verformungseinheit 5 das Ende 10 des Führungsmittels 8 gegriffen ist. Um in diesen Zustand zu gelangen, ist das Gehäuse 18 mit Mundstück 6 auf das Ende 10 des Führungsmittels aufgesetzt worden. Der Fortsatz 15 des Mundstücks 6 ist teilweise in das Rohrende 7 eingeführt. Fig. 3 zeigt die Verformungseinheit 5 in dem Zustand, in dem das Rohrende 7 gebördelt ist. Hierzu ist der Innenkörper 21 in Zugrichtung, d.h. ins Innere des Gehäuses 18 bzw. weg vom Mundstück 6 bewegt worden. Die konisch ausgebildete Innenseite 23 des Innenkörpers 21 wirkt bei der Bewegung des Innenkörpers 21 auf die Klauen 19, die hierdurch radial zum Ende 10 des Führungsmittels 8 gedrückt werden. Die dem Innenkörper 21 zugewandte Fläche der Klauen 19 ist zumindest bereichsweise ebenfalls konisch ausgebildet. Somit ist durch das Zusammenwirken der Klauen 19, des Innenkörpers 21, des in Form einer Gewindestange ausgebildeten Endes 10 des Führungsmittels und der Feder 20 eine Reibschluss- und eine Kraftschlussverbindung gebildet.

Den Fig. 2 bis 4 ist entnehmbar, dass das Gehäuse 18 der Verformungseinheit 5 modular ausgebildet und über das Adapterstück 24 an die einen Pneumatikkolben umfassende Baugruppe 25 und an das Pneumatikgehäuse 26 an eine nicht gezeigte pneumatische Versorgungseinrichtung anschließbar ist.

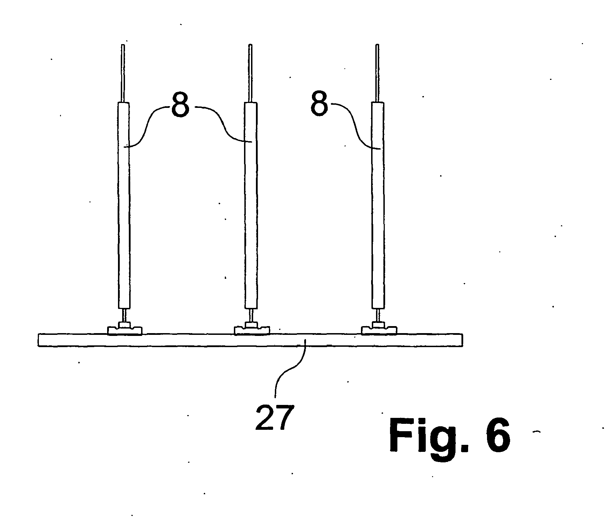

Fig. 6 zeigt lediglich schematisch eine Montagestation, die zur Montage von Kabeltrommeln, also zum Verbinden flächiger Teile, dient. Hierzu sind auf einer Basisplatte 27 drei Führungsmittel 8 befestigt, wobei die Basisplatte 27 in der Seitenansicht gezeigt ist. Die Führungsmittel 8 sind senkrecht zur Basisplatte 27 angeordnet, wobei die Führungsmittel 8 - von oben gesehen - ein gleichseitiges Dreieck bilden.

Auf jedes der Führungsmittel 8 wird jeweils ein Rohr aufgebracht. Danach wird das erste Teil der Kabeltrommel, das Distanzteil und schließlich das zweite Teil der Kabeltrommel aufgebracht, wobei die Teile entsprechende Bohrungen aufweisen. Zum Verbinden der Einzelteile der Kabeltrommel sind lediglich die drei Rohre zu bördeln, danach kann die fertig montierte Kabeltrommel von der Basisplatte 27 bzw. von den Führungsmitteln 8 abgenommen werden.

Abschließend sei ganz besonders darauf hingewiesen, dass die voranstehend erörterten Ausführungsbeispiele lediglich zur Beschreibung der beanspruchten Lehre dienen, diese jedoch nicht auf die Ausführungsbeispiele einschränken.

## Patentansprüche

1. Vorrichtung zum Verbinden flächiger Teile (2), insbesondere zur Herstellung einer Kabeltrommel (1), wobei im verbundenen Zustand die Teile (2), vorzugsweise parallel zueinander durch ein Distanzteil (3) beabstandet und über ein sich durch das Distanzteil (3) und die beiden Teile (2) hindurch erstreckendes Rohr (4) zusammengehalten sind, wobei in der Vorrichtung eine ein erstes Mundstück (6) aufweisende Verformungseinheit (5) zum Verformen, vorzugsweise zum Bördeln, eines ersten Rohrendes (7) vorgesehen ist, wobei ein Führungsmittel (8) vorgesehen ist, mit einem ersten von der Verformungseinheit (5) angreifbaren Ende (10), und einem zweiten ein zweites Mundstück (9) zum Verformen des zweiten Rohrendes umfassendes Ende, wobei das Führungsmittel (8) in das Rohr (4) einbringbar oder das Rohr (4) auf das Führungsmittel (8) aufbringbar ist, so dass das Führungsmittel (8) sich durch das Rohr (4) hindurch erstreckt und das zweite Mundstück (9) an dem zweiten Rohrende zur Anlage kommt, und die Verformungseinheit (5) an dem ersten Ende (10) des Führungsmittels (8) angreifen und die beiden Mundstücke (6, 9) aufeinander zu bewegen kann, **dadurch gekennzeichnet, dass** der Aussendurchmesser des Führungsmittels (8) nur geringfügig kleiner als der Innendurchmesser des Rohrs (4) ist, derart dass das Rohr (4) während der durch die Bewegung der beiden Mundstücke (6,9) indizierten Verformung vom Führungsmittel (8) geführt wird, so dass aufgrund dieser Führung keine wesentlichen Verformungen des Rohrs (4) im Bereich zwischen den Rohrenden (7, 10) auftreten kann.

2. Vorrichtung nach Anspruch 1, **dadurch gekennzeichnet, dass** das der Verformungseinheit (5) zugewandte Ende (10) des Führungsmittels (8) sich durch das der Verformungseinheit (5) zugeordnete Mundstück (6) und in die Verformungseinheit (5) hinein erstreckt.

3. Vorrichtung nach Anspruch 1 oder 2, **dadurch gekennzeichnet, dass** die Mundstücke (6, 9) eine zum Bördeln geeignete Form aufweisen.

4. Vorrichtung nach Anspruch 3, **dadurch gekennzeichnet, dass** die Mundstücke (6, 9) größtenteils massiv ausgebildet sind.

5. Vorrichtung nach einem der Ansprüche 1 bis 4, **dadurch gekennzeichnet, dass** der zur Verformung des Rohrs (4) dienende Bereich (11) der beiden Mundstücke (6, 9) zumindest nahezu die gleiche Form aufweist.

6. Vorrichtung nach einem der Ansprüche 1 bis 5, **dadurch gekennzeichnet, dass** der das Rohr (4) umgebende Bereich des Führungsmittels (8) zylinderförmig ausgebildet ist.

7. Vorrichtung nach einem der Ansprüche 1 bis 6, **dadurch gekennzeichnet, dass** das Führungsmittel (8) samt dem ihm zugeordneten Mundstück (9) einteilig oder modular zusammenbaubar ausgebildet ist.

8. Vorrichtung nach einem der Ansprüche 1 bis 7, **dadurch gekennzeichnet, dass** das der Verformungseinheit (5) zugewandte Ende (10) des Führungsmittels (8) eine raue Oberfläche, ein Gewinde oder eine in Zugrichtung gerichtete Struktur aufweist.

9. Vorrichtung nach Anspruch 8, **dadurch gekennzeichnet, dass** die Struktur in Form einer Zahnung oder Schuppung ausgebildet ist.

10. Vorrichtung nach Anspruch 8 oder 9, **dadurch gekennzeichnet, dass** das der Verformungseinheit (5) zugewandte Ende (10) des Führungsmittels (8) mindestens eine Hinterschneidung aufweist, in die ein der Verformungseinheit zugeordnetes, komplementär ausgebildetes Element eingreift.

11. Vorrichtung nach einem der Ansprüche 1 bis 10, **dadurch gekennzeichnet, dass** die Verformungseinheit (5) ein Gehäuse (18) aufweist, an dem das ihr zugeordnete Mundstück (6) befestigt ist, wobei in dem Gehäuse (18) Klauen (19) vorgesehen sind, die das der Verformungseinheit (5) zugewandte Ende (10) des Führungsmittels (8) greifen.

12. Vorrichtung nach Anspruch 11, **dadurch gekennzeichnet, dass** die Klauen (19) durch eine Feder (20) gespannt sind, wobei das Gehäuse (18) einen in Zugrichtung verschiebbar angeordneten, die Klauen (19) aufnehmenden Innenkörper (21) aufweist, der zum Ziehen des Führungsmittels (8) samt Klauen (19) in Zugrichtung bewegbar ist, und wobei das Gehäuse (18) der Verformungseinheit(5) modular ausgebildet und an eine pneumatische oder hydraulische Versorgungseinrichtung anschließbar ist.

13. Vorrichtung nach einem der Ansprüche 1 bis 12, **dadurch gekennzeichnet, dass** die Verformungseinheit (5) ein Hydraulik-/Pneumatikgehäuse (26) mit einem Hydraulik-/Pneumatikkolben umfasst und/oder, dass es sich bei der Verformungseinheit (5) um ein vorzugsweise pneumatisch betriebenes, gegebenenfalls modifiziertes Handnietgerät oder Standnietgerät handelt.

14. Verfahren zum Verbinden flächiger Teile, insbesondere zur Herstellung einer Kabeltrommel (1), wobei im verbundenen Zustand die Teile (2) vorzugsweise parallel zueinander durch ein Distanzteil (3) beabstandet und über ein sich durch das Distanzteil (3) und die beiden Teile (2) hindurch erstreckendes Rohr (4) zusammengehalten werden und wobei eine ein erstes Mundstück (6) aufweisende Verformungseinheit (5) ein erstes Rohrende (7) verformt, vorzugsweise bördelt, insbesondere mit einer Vorrichtung nach einem der Ansprüche 1 bis 13, **dadurch gekennzeichnet, dass** ein Führungsmittel (8) vorgesehen ist, mit einem ersten von der Verformungseinheit (5) angreifbaren Ende (10), und einem zweiten ein zweites Mundstück (9) zum Verformen des zweiten Rohrendes umfassendes Ende, wobei der Außendurchmesser des Führungsmittels (8) nur geringfügig kleiner als der Innendurchmesser des Rohrs (4) ist und wobei das Rohr (4) auf das Führungsmittel (8) aufgebracht oder das Führungsmittel (8) in das Rohr (4) eingebracht wird, so dass das Führungsmittel (8) sich durch das Rohr (4) hindurch erstreckt und das zweite Mundstück (9) an dem zweiten Rohrende zur Anlage kommt, und dass die Verformungseinheit (5) an dem ersten Ende (10) des Führungsmittels (8) angreift und die beiden Mundstücke (6, 9) aufeinander zu bewegt.

15. Verfahren nach Anspruch 14, **dadurch gekennzeichnet, dass** eine Basisplatte (27) mehrere Führungsmittel (8) umfasst und dass eine Kabeltrommel (1) durch folgende Verfahrensschritte zusammengebaut wird:
- Aufbringen jeweils eines Rohrs (4) auf ein Führungsmittel (8),
- Aufbringen des ersten Teils (2) der Kabeltrommel (1),
- Aufbringen des Distanzteils (3),
- Aufbringen des zweiten Teils (2) der Kabeltrommel (1),
- Verformen der Rohrenden mit der Verformungseinheit.

16. Verfahren nach Anspruch 15, **dadurch gekennzeichnet, dass** mit mehreren Verformungseinheiten (5) gleichzeitig mehrere Rohre (4) verformt werden.

## Claims

1. Apparatus for connecting planar parts (2), in particular for producing a cable drum (1), wherein in the connected state the parts (2) are spaced apart by a spacer (3), preferably parallel to one another, and are held together via a tube (4) which extends through the spacer (3) and the two parts (2), wherein a shaping unit (5), which has a first mouth piece (6), for shaping, preferably for beading, a first tube end (7) is provided in the apparatus, wherein a guide means (8) is provided, this having a first end (10), on which the shaping unit (5) can act, and a second end comprising a second mouth piece (9) for shaping the second tube end, wherein the guide means (8) can be introduced into the tube (4) or the tube (4) can be applied to the guide means (8), so that the guide means (8) extends through the tube (4) and the second mouth piece (9) comes to lie against the second tube end, and the shaping unit (5) can act on the first end (10) of the guide means (8) and move the two mouth pieces (6, 9) towards one another, **characterised in that** the outside diameter of the guide means (8) is only slightly smaller than the inside diameter of the tube (4), such that the tube (4) is guided by the guide means (8) during the shaping induced by the movement of the two mouth pieces (6, 9), so that no substantial shaping of the tube (4) in the region between the tube ends (7, 10) can occur on account of this guidance.

2. Apparatus according to Claim 1, **characterised in that** the end (10) of the guide means (8) which faces the shaping unit (5) extends through the mouth piece (6) associated with the shaping unit (5) and into the shaping unit (5).

3. Apparatus according to Claim 1 or 2, **characterised in that** the mouth pieces (6, 9) are of a shape which is suitable for beading.

4. Apparatus according to claim 3, **characterised in that** the mouth pieces (6, 9) are for the most part of a solid formation.

5. Apparatus according to any one of Claims 1 to 4, **characterised in that** the regions (11) of the two mouth pieces (6, 9) which serve to shape the tube (4) are at least substantially of the same shape.

6. Apparatus according to any one of Claims 1 to 5, **characterised in that** the region of the guide means (8) which surrounds the tube (4) is of a cylindrical formation.

7. Apparatus according to any one of Claims 1 to 6, **characterised in that** the guide means (8) together with the mouth piece (9) associated with it is formed in one part or so that it can be assembled in a modular manner.

8. Apparatus according to any one of Claims 1 to 7, **characterised in that** the end (10) of the guide means (8) which faces the shaping unit (5) has a rough surface, a screw thread or a structure which is directed in the pulling direction.

9. Apparatus according to Claim 8, **characterised in that** the structure is in the form of teeth or scales.

10. Apparatus according to Claim 8 or 9, **characterised in that** the end (10) of the guide means (8) which faces the shaping unit (5) has at least one undercut in which a complementarily formed element associated with the shaping unit engages.

11. Apparatus according to any one of Claims 1 to 10, **characterised in that** the shaping unit (5) has a housing (18) to which the mouth piece (6) associated with it is fastened, wherein claws (19) are provided in the housing (18), which claws grip the end (10) of the guide means (8) which faces the shaping unit (5).

12. Apparatus according to Claim 11, **characterised in that** the claws (19) are tensioned by a spring (20), wherein the housing (18) has an inner body (21) which is disposed so as to be displaceable in the pulling direction, holds the claws (19) and can be moved in order to pull the guide means (8) together with the claws (19) in the pulling direction, and wherein the housing (18) of the shaping unit (5) is of a modular formation and can be connected to a pneumatic or hydraulic supply device.

13. Apparatus according to any one of Claims 1 to 12, **characterised in that** the shaping unit (5) comprises a hydraulic/pneumatic housing (26) with a hydraulic/pneumatic piston, and/or that the shaping unit is a preferably pneumatically operated, optionally modified hand riveting appliance or stand-up riveting appliance.

14. Method for connecting planar parts, in particular for producing a cable drum (1), wherein in the connected state the parts (2) are spaced apart by a spacer (3), preferably parallel to one another, and are held together via a tube (4) which extends through the spacer (3) and the two parts (2), and wherein a shaping unit (5), which has a first mouth piece (6), shapes, preferably beads, a first tube end (7), in particular with an apparatus according to any one of Claims 1 to 13, **characterised in that** a guide means (8) is provided, this having a first end (10), on which the shaping unit (5) can act, and a second end comprising a second mouth piece (9) for shaping the second tube end, wherein the outside diameter of the guide means (8) is only slightly smaller than the inside diameter of the tube (4), and wherein the tube (4) is applied to the guide means (8) or the guide means (8) is introduced into the tube (4), so that the guide means (8) extends through the tube (4) and the second mouth piece (9) comes to lie against the second tube end, and that the shaping unit (5) acts on the first end (10) of the guide means (8) and moves the two mouth pieces (6, 9) towards one another.

15. Method according to Claim 14, **characterised in that** a base plate (27) comprises a plurality of guide means (8), and that a cable drum (1) is assembled by the following method steps:
- applying a respective tube (4) to a guide means (8),
- applying the first part (2) of the cable drum (1),
- applying the spacer (3),
- applying the second part (2) of the cable drum (1),
- shaping the tube ends with the shaping unit.

16. Method according to Claim 15, **characterised in that** a plurality of tubes (4) can be shaped at the same time with a plurality of shaping units (5).

## Revendications

1. Dispositif pour l'assemblage de pièces plates (2), en particulier pour la fabrication d'un tambour de câble (1), les pièces (2) étant écartées les unes des autres, de préférence parallèlement les unes aux autres, à l'état assemblé, par une pièce d'écartement (3) et maintenues ensemble par un tube (4) s'étendant complètement à travers la pièce d'écartement (3) et les deux pièces (2), une unité de déformation (5) présentant un premier bec (6) étant prévue pour la déformation, de préférence pour le bordage à arête vive, d'une première extrémité (7) de tube, un organe de guidage (8) étant prévu avec une première extrémité (10) pouvant être soumise à faction de l'unité de déformation (5) et une seconde extrémité comprenant un second bec (9) pour la déformation de la seconde extrémité de tube, l'organe de guidage (8) pouvant être introduit dans le tube (4) ou bien le tube (4) pouvant être amené sur l'organe de guidage (8) de telle manière que l'organe de guidage (8) s'étend complètement à travers le tube (4) et le second bec (9) vient en appui à la seconde extrémité de tube et l'unité de déformation (5) peut venir en prise à la première extrémité (10) de l'organe de guidage (8) et déplacer les deux becs (6, 9) l'un vers l'autre, **caractérisé par le fait que** le diamètre extérieur de l'organe de guidage (8) n'est que légèrement plus petit que le diamètre intérieur du tube (4) de telle sorte que le tube (4) est guidé pendant la déformation indiquée de l'organe de guidage (8), de telle sorte que des déformations importantes du tube (4) ne peuvent pas se produire dans la zone entre les extrémités de tube (7, 10) en raison de ce guidage.

2. Dispositif selon la revendication 1, **caractérisé par le fait que** l'extrémité (10) de l'organe de guidage (8) tournée vers l'unité de déformation (5) s'étend à travers le bec (6) adjoint à l'unité de déformation (5) et dans l'intérieur de l'unité de déformation (5).

3. Dispositif selon la revendication 1 ou 2, **caractérisé par le fait que** les becs (6, 9) présentent une forme appropriée pour le bordage à arête vive.

4. Dispositif selon la revendication 3, **caractérisé par le fait que** les becs (6, 9) sont réalisés massifs pour la plus grande partie.

5. Dispositif selon l'une des revendications 1 à 4, **caractérisé par le fait que** la zone (11) des deux becs (6, 9) servant à la déformation du tube (2) présente au moins à peu près la même forme.

6. Dispositif selon l'une des revendications 1 à 5, **caractérisé par le fait que** la zone de l'organe de guidage (8) entourant le tube (4) est réalisée de forme cylindrique.

7. Dispositif selon l'une des revendications 1 à 6, **caractérisé par le fait que** l'organe de guidage (8) y compris le bec (9) qui lui est adjoint est réalisé d'une seule pièce ou pouvant être assemblé de manière modulaire.

8. Dispositif selon l'une des revendications 1 à 7, **caractérisé par le fait que** l'extrémité (10) de l'organe de guidage (8) tournée vers l'unité de déformation (5) présente une surface rugueuse, un filet ou une structure dirigée en direction de traction.

9. Dispositif selon la revendication 8, **caractérisé par le fait que** la structure est réalisée sous forme d'une denture ou d'une structure à écailles.

10. Dispositif selon la revendication 8 ou 9, **caractérisé par le fait que** l'extrémité (10) de l'organe de guidage (8) tournée vers l'unité de déformation (5) présente au moins une contre-dépouille dans laquelle vient en prise un élément adjoint à l'unité de déformation et réalisé de forme complémentaire.

11. Dispositif selon l'une des revendications 1 à 10, **caractérisé par le fait que** l'unité de déformation (5) présente un carter (18) auquel est fixé le bec (6) qui lui est adjoint, des griffes (19) étant prévues dans le carter (18) qui prennent l'extrémité (10) de l'organe de guidage (8) tournée vers l'unité de déformation (5).

12. Dispositif selon la revendication 11, **caractérisé par le fait que** les griffes (19) sont tendues par un ressort (20), le carter (18) présentant un corps intérieur (21) recevant les griffes (19) qui est disposé coulissant en direction de traction, qui est mobile en direction de traction pour tirer l'organe de guidage (8) y compris les griffes (18) en direction de traction et le carter (18) de l'unité de déformation (5) étant réalisé modulaire et pouvant être raccordé à une installation d'alimentation pneumatique ou hydraulique.

13. Dispositif selon l'une des revendications 1 à 12, **caractérisé par le fait que** l'unité de déformation (5) comprend un carter hydraulique/pneumatique avec un piston hydraulique/pneumatique et/ou qu'il s'agit pour l'unité de déformation (5) d'un appareil de rivetage manuel ou d'un appareil de rivetage sur pied, de préférence entraîné de manière pneumatique, le cas échéant modifié.

14. Procédé pour l'assemblage de pièces plates , en particulier pour la fabrication d'un tambour de câble (1), les pièces (2) étant écartées les unes des autres, de préférence parallèlement les unes aux autres, à l'état assemblé, par une pièce d'écartement (3) et maintenues ensemble par un tube (4) s'étendant complètement à travers la pièce d'écartement (3) et les deux pièces (2) et une unité de déformation (5) présentant un premier bec (6) déformant, de préférence bordant à arête vive, une première extrémité (7) de tube, en particulier par un dispositif selon l'une des revendications 1 à 13, **caractérisé par le fait qu'**est prévu un organe de guidage (8) avec une première extrémité (10) pouvant être saisie par l'unité de déformation (5) et une seconde extrémité comprenant un second bec (9) pour la déformation de la seconde extrémité de tube (9), le diamètre extérieur de l'organe de guidage (8) n'étant que légèrement plus petit que le diamètre intérieur du tube (4) et le tube (4) étant monté sur l'organe de guidage (8) ou l'organe de guidage (8) étant monté dans le tube (4) de telle manière que l'organe de guidage (8) s'étend complètement à travers le tube (4) et le second bec (9) vient en appui à la seconde extrémité de tube, et que l'unité de déformation (5) vient en prise à la première extrémité (10) de l'organe de guidage (8) et déplace les deux becs (6, 9) l'un vers l'autre.

15. Procédé selon la revendication 14, **caractérisé par le fait qu'**une plaque de base (27) comprend plusieurs organes de guidage (8) et qu'un tambour de câble (1) est assemblé par les étapes de procédé suivantes :
- amenée respectivement d'un tube (4) sur un organe de guidage (8),
- amenée de la pièce d'écartement (3),
- amenée de la première pièce (2) du tambour de câble (1),
- amenée de la seconde pièce (2) du tambour de câble (1),
- déformation des extrémités du tube par l'unité de déformation.

16. Procédé selon la revendication 15, **caractérisé par le fait que** plusieurs tubes (4) sont déformés simultanément par plusieurs unités de déformation (5).
